# EUROPÄISCHE PATENTANMELDUNG

(11) **EP 3 806 352 A1**
(43) Veröffentlichungstag der Anmeldung: **14.04.2021**
(21) Anmeldenummer: 19202568.2
(22) Anmeldetag: 10.10.2019
(51) Int. Cl.: H04B 10/114, B63C 11/00, H02J 50/10, H04B 10/80

(54) **VERBINDUNGSSCHNITTSTELLE FÜR ANWENDUNGEN UNTER WASSER**

(71) Anmelder: Scubajet GmbH, 9020 Klagenfurt am Wörthersee (AT)
(72) Erfinder: KUNDIGRABER, Armin, 9161 Maria Rain (AT)
(74) Vertreter: Sonn & Partner Patentanwälte

(57) **Zusammenfassung**

Verbindungsschnittstelle (8) für Anwendungen unter Wasser, insbesondere für eine Wassersportausrüstung (1), mit einer Verbindungseinheit zum Übertragen von Daten und mit einer Ladespule (10) zum induktiven Übertragen von Energie an eine gleichartige Verbindungsschnittstelle, wobei die Verbindungseinheit als optische Verbindungseinheit (9), insbesondere als Infrarot-Verbindungseinheit, zum Senden und/oder Empfangen eines optischen Signals ausgebildet ist.

## Beschreibung

Die Erfindung betrifft eine Verbindungsschnittstelle für Anwendungen unter Wasser, insbesondere für eine Wassersportausrüstung, mit einer Verbindungseinheit zum Übertragen von Daten und mit einer Ladespule zum induktiven Übertragen von Energie an eine gleichartige Verbindungsschnittstelle. Des Weiteren betrifft die Erfindung eine Wassersportausrüstung, ein Erweiterungsmodul für eine Wassersportausrüstung und ein Set bestehend aus einer Wassersportausrüstung und einem Erweiterungsmodul.

Elektronische Geräte, die unter Wasser eingesetzt werden, besitzen zur Abdichtung gegenüber dem umgebenden Wasser üblicherweise wasserdichte Gehäuse. Um dabei den Austausch von Daten und Energie mit anderen elektronischen Geräten oder Modulen zu ermöglichen, ohne die Dichtheit des Gehäuses zu gefährden, bieten sich Verbindungsschnittstellen der eingangs erwähnten Art an. Diese besitzen den Vorteil, dass sie drahtlos Daten und Energie senden und/oder empfangen können und daher auf drahtgebundene Steckverbindungen, die zwingend einen elektrischen Kontakt voraussetzen, verzichtet werden kann.

Aus der US 2015/0312985 A1 ist ein induktives Energieübertragungssystem bekannt, welches neben der Übertragung von Energie auch eine Datenkommunikation über Funkeinheiten ermöglicht. Nachteiliger Weise kann es bei der Datenübertragung zu Störungen durch einen externen Sender oder allgemein externe Störungsquellen (z.B. ein Motor) kommen. Eine zuverlässige Datenübertragung ist somit nicht immer gewährleistet, was insbesondere bei sicherheitskritischen Anwendungen von Nachteil ist. Darüber hinaus ist bei dem Energieübertragungssystem der US 2015/0312985 A1 eine Duplex-Datenübertragung nicht möglich.

Ein ähnliches Energieübertragungssystem ist des Weiteren noch aus der WO 2016/153589 A2 bekannt.

In Anbetracht der obigen Ausführungen ist es daher Aufgabe der vorliegenden Erfindung, die Nachteile des Standes der Technik zu reduzieren oder gar gänzlich zu beseitigen. Insbesondere ist es Aufgabe der vorliegenden Erfindung, eine Verbindungsschnittstelle der eingangs erwähnten Art bereitzustellen, bei der die Datenübertragung nicht durch die Energieübertragung beeinflusst wird.

Gelöst wird diese Aufgabe durch eine Verbindungsschnittstelle mit den Merkmalen des Anspruchs 1.

Demnach wird die Aufgabe dadurch gelöst, dass die Verbindungseinheit als optische Verbindungseinheit zum Senden und/oder Empfangen eines optischen Signals ausgebildet ist. Vorteilhafterweise kann durch die Verwendung einer optischen Verbindungseinheit eine Beeinflussung der Datenübertragung durch die Ladespule vermieden und dadurch die Stabilität und Sicherheit der Datenübertragung verbessert werden. Dadurch ist die erfindungsgemäße Verbindungsschnittstelle insbesondere für sicherheitskritische Anwendungen unter Wasser, wie etwa Antriebe oder Steuerungsvorrichtungen, besonders geeignet. Die optische Verbindungseinheit kann für das Senden und/oder Empfangen in einem Wellenlängenbereich zwischen 350 nm (Nanometer) und 1600 nm ausgebildet sein. Als optische Verbindungseinheit kann insbesondere eine Infrarot-Verbindungseinheit (IR-Verbindungseinheit), vorzugsweise in einem Wellenlängenbereich zwischen 780 nm und 1600 nm, eingesetzt werden. Die Verbindungseinheit kann sowohl eine Sendeeinheit, als auch eine Empfangseinheit aufweisen. Dadurch wird eine bidirektionale Datenübertragung ermöglicht, die auch zeitgleich stattfinden kann (Duplexverbindung). Es kann jedoch auch vorgesehen sein, dass die Verbindungseinheit nur eine Sendeeinheit oder nur eine Empfangseinheit aufweist. Weiters kann vorgesehen sein, dass auch die Ladespule durch Modulation des von ihr erzeugten elektromagnetischen Feldes ebenfalls Daten senden kann bzw. empfangen kann, d.h. als zusätzlicher Kanal neben der optischen Verbindungseinheit. Da die erfindungsgemäße Verbindungsschnittstelle sowohl die drahtlose Übertragung von Energie als auch die drahtlose Übertragung von Daten ermöglicht, kann die Verbindungsschnittstelle vorteilhafterweise vollständig in ein Gehäuse integriert werden und eignet sich daher insbesondere für den Einsatz unter Wasser. Unter "Übertragen" ist in dieser Offenbarung das Senden und/oder Empfangen von Energie und/oder Daten zu verstehen. Mit der Ladespule kann demnach Energie an eine gleichartige Verbindungsschnittstelle übertragen oder von dieser empfangen werden. Die Ladespule kann als Flachspule, insbesondere mit einer spiralförmigen oder ringförmigen Wicklung, ausgebildet sein. Dadurch kann das Bauvolumen der Verbindungsschnittstelle gering gehalten werden.

In einer bevorzugten Ausführungsform ist vorgesehen, dass die Verbindungseinheit eine Sendeeinheit, insbesondere eine Sendediode, und/oder eine Empfangseinheit, insbesondere eine Empfangsdiode oder einen Empfangstransistor, aufweist. In einer ganz besonders bevorzugten Ausführungsform weist die Verbindungseinheit eine Sendeeinheit und eine Empfangseinheit auf. Dadurch kann eine bidirektionale optische Datenübertragung stattfinden, bei der das Senden unabhängig vom Empfangen erfolgen kann. Die Sendeeinheit kann von der Empfangseinheit getrennt, insbesondere funktionell und örtlich getrennt, sein. Bei der Sendediode kann es sich um einen IR-Emitter, wie eine Infrarot-Sendediode, insbesondere eine IR-LED-Diode, handeln. Bei der Empfangsdiode kann es sich um eine Infrarot-Empfangsdiode, insbesondere einen IR-Phototransistor, handeln. Die Sendeeinheit und/oder die Empfangseinheit können unter anderem auch als SMD-Bauteile (SMD, "Surface Mounted Device") oder THT-Bauteile (THT, "Through Hole Technology") ausgeführt sein.

Wenn die Verbindungseinheit eine Sendeeinheit und eine Empfangseinheit aufweist, ist es vorteilhaft, wenn die Ladespule zwischen der Sendeeinheit und der Empfangseinheit angeordnet ist. Dadurch kann die Gefahr eines Übersprechens zwischen Sendeeinheit und Empfangseinheit, d.h. ein Einkoppeln von Licht in den jeweils anderen Kanal, weiter reduziert oder gar gänzlich vermieden werden. Alternativ oder zusätzlich kann allgemein eine optische Abschirmung zwischen den beiden optischen Kanälen, also der Sendeeinheit und der Empfangseinheit, vorgesehen sein. Eine solche optische Abschirmung kann beispielsweise durch eine Trennwand zwischen den Kanälen gebildet sein, z.B. in Form einer Rippe zwischen der Sendeeinheit und der Empfangseinheit oder in Form eines Rohrs oder Tunnels, in dem die Sendeeinheit oder die Empfangseinheit angeordnet ist. Es kann auch jeweils ein Rohr oder ein Tunnel für die Sendeeinheit und die Empfangseinheit vorgesehen sein.

Um das optische Signal zu führen und die Lichtstreuung zu reduzieren, kann die Verbindungseinheit zumindest einen Lichtwellenleiter zur Leitung des optischen Signals aufweisen. Vorteilhafterweise können dadurch Sende- und/oder Empfangseinheiten innerhalb der Verbindungsschnittstelle an einer anderen, konstruktionstechnisch betrachtet möglicherweise günstigeren Stelle, positioniert werden. Beispielsweise kann die Länge eines freien Übertragungswegs, d.h. außerhalb von Lichtwellenleitern, reduziert werden. Insbesondere kann vorgesehen sein, dass der Lichtwellenleiter mit einem ersten Ende das optische Signal in die Verbindungsschnittstelle ein- und/oder auskoppelt und mit einem zweiten Ende an die Empfangseinheit und/oder Sendeeinheit angekoppelt ist und dadurch das optische Signal zur Empfangseinheit führt und/oder von der Sendeeinheit wegleitet. Wenn eine Sendeeinheit und eine Empfangseinheit vorgesehen sind, ist es günstig, wenn jeweils ein eigener Lichtwellenleiter für die Sendeeinheit und die Empfangseinheit vorgesehen ist, der, wie beschrieben, an die Sendeeinheit bzw. die Empfangseinheit angekoppelt ist.

Mittlerweile haben elektronische Geräte auch Einzug in den Tauchsport gefunden. Da die Verbindungsschnittstelle drahtlos und ohne elektrischen Kontakt Daten und Energie übertragen kann, eignet sie sich besonders für den Einsatz unter Wasser. Daher ist in einer bevorzugten Ausführungsform eine Wassersportausrüstung, insbesondere ein Tauchscooter, mit einem Gehäuse und einem in dem Gehäuse angeordneten Energiespeicher vorgesehen, wobei an einer Außenwandung des Gehäuses eine Verbindungsschnittstelle gemäß den obigen Ausführungen vorgesehen ist, deren Ladespule mit dem Energiespeicher verbunden ist. Die Wassersportausrüstung kann über die Verbindungsschnittstelle andere Geräte oder Module, die eine gleichartige Verbindungsschnittstelle besitzen, mit Energie versorgen und Daten an diese senden und/oder von dieser empfangen. Der Energiespeicher ist bevorzugt als elektrischer Akkumulator oder elektrische Batterie ausgebildet. Das Gehäuse ist vorzugsweise wasserdicht, insbesondere wasserdicht nach IP69K, ausgeführt. Die Außenwandung des Gehäuses stellt die äußere Begrenzung des Gehäuses dar. Die Verbindungsschnittstelle ist bevorzugt an einer Innenseite der Außenwandung oder in einer Ausnehmung der Außenwandung angeordnet. Wichtig dabei ist, dass das optische Signal beim Senden von der Verbindungseinheit nach außen, d.h. außerhalb des Gehäuses, bzw. beim Empfangen von außen zur Verbindungseinheit gelangen kann. Dazu kann die Außenwandung an der Stelle, an der die Verbindungsschnittstelle angeordnet ist, einen für den genutzten Wellenlängenbereich des optischen Signals transparenten Bereich aufweisen. Wenn die Verbindungsschnittstelle in einer Ausnehmung der Außenwandung angeordnet ist, kann eine wasserdichte Abdeckung für die Verbindungsschnittstelle verwendet werden oder die Verbindungsschnittstelle mit einem Kunststoff, beispielsweise einem Hartz, eingegossen sein. Die Abdeckung und der Kunststoff können dabei wiederum einen für den genutzten Wellenlängenbereich des optischen Signals transparenten Bereich aufweisen und gegenüber der übrigen Außenwandung abgedichtet sein. Beispielsweise kann auch ein Lichtwellenleiter in eine Bohrung in der Außenwandung eingeklebt sein. Oder es kann im Fall einer THT-Diode als Sendeeinheit und/oder Empfangseinheit, die Diode selbst in die Bohrung eingeklebt sein. Wichtig ist dabei, dass sämtliche elektronischen Bauteile im Gehäuse gegenüber dem umgebenden Wasser abgedichtet sind. Alternativ kann die Verbindungsschnittstelle auch an der Außenseite des Gehäuses an der Außenwandung angeordnet sein. In diesem Fall kann die Verbindungsschnittstelle über ein eigenes Gehäuse verfügen, das gegenüber dem umgebenden Wasser abgedichtet ist. Natürlich kann die Wassersportausrüstung eine Mehrzahl an Verbindungsschnittstellen gemäß den obigen Ausführungen aufweisen. Somit können gleichzeitig mehrere Geräte bzw. Module mit der Wassersportausrüstung verbunden und mit Energie versorgt werden. Die verbundenen Geräte oder Module benötigen daher keine eigenständige Energieversorgung, sondern können von der Wassersportausrüstung mit Energie versorgt werden. Der Begriff "Wassersportausrüstung" ist dabei nicht einschränkend auszulegen; die Erfindung umfasst vielmehr Geräte für (Unter-)Wasser-Anwendungen jeglicher Art. Als Beispiele für Wassersportausrüstungen im Sinne der Erfindung seien mobile Antriebe, insbesondere Tauchscooter, sowie Kameras, Tauchflaschen, Tauchwesten, oder Lampen genannt. Aber auch Wassergefährte oder deren Teile, wie Boote oder Bootsteile, Unterwasserdrohnen und U-Boote sind gemeint, wenn hier von "Wassersportausrüstung" die Rede ist. Schließlich wäre auch ein Gerät, das nur der Energieversorgung anderer Geräte dient, d.h. eine Art Unter-Wasser-Batterie, mit einer entsprechenden Verbindungsschnittstelle eine Wassersportausrüstung im Sinne der Erfindung.

Um den Wirkungsgrad bei der Energieübertragung zu verbessern, kann die Verbindungsschnittstelle, insbesondere die Ladespule, im Wesentlichen parallel zur Außenwandung angeordnet sein. Durch diese Anordnung kann die Menge an magnetischen Fluss, der aus dem Gehäuse austritt, erhöht werden.

In einer bevorzugten Ausführungsform ist vorgesehen, dass das Gehäuse eine Befestigungsvorrichtung, vorzugsweise eine magnetische und/oder eine mechanische Befestigungsvorrichtung, insbesondere eine Befestigungsschiene, zur vorübergehenden Befestigung eines Erweiterungsmoduls an der Wassersportausrüstung aufweist, sodass die Verbindungsschnittstelle der Wassersportausrüstung mit einer Verbindungsschnittstelle des Erweiterungsmoduls verbindbar ist. Unter "verbindbar" ist in diesem Zusammenhang zu verstehen, dass eine Daten- und Energieübertragung zwischen den Verbindungsschnittstellen möglich ist. Dabei muss das optische Signal von der einen Verbindungseinheit zur anderen gelangen und Energie von der einen Ladespule zur anderen übertragen werden können. Die Befestigungsvorrichtung kann einen Rastmechanismus aufweisen, mit dem das Erweiterungsmodul in einer Rastposition mit der Befestigungsvorrichtung verrastet werden kann. Derartige Rastmechanismen sind aus dem Stand der Technik bekannt. Der Rastmechanismus kann auch ein Auslöseelement aufweisen, mit dem das Erweiterungsmodul wieder aus der Rastposition gelöst werden kann. Alternativ oder zusätzlich kann die Befestigungsvorrichtung auch einen Teil einer Schraubverbindung mit dem Erweiterungsmodul bilden. Beispielsweise kann die Befestigungsvorrichtung, vorzugsweise die Befestigungsschiene, ein Befestigungsloch aufweisen, in das eine Schraube des Erweiterungsmoduls einschraubbar ist. Die Befestigungsvorrichtung kann auch einen Permanentmagneten aufweisen. Vorzugsweise ist die Verbindungsschnittstelle des Erweiterungsmoduls in der Rastposition bzw. in der verschraubten Position derart angeordnet, dass die Haupterstreckungsebene der Ladespule des Erweiterungsmoduls parallel zur Haupterstreckungsebene der Ladespule der Wassersportausrüstung angeordnet ist und die Ladespulen übereinanderliegen. Optional können etwaige Symmetrieachsen der Ladespulen auf einer gemeinsamen gedachten Geraden liegen, sodass eine optimale elektromagnetische Kopplung stattfindet. Durch diese Anordnung kann die elektromagnetische Kopplung der beiden Ladespulen verbessert werden.

Zur Erweiterung der Wassersportausrüstung ist in einer Ausführungsform ein Erweiterungsmodul für eine Wassersportausrüstung mit einem Modul-Gehäuse vorgesehen, wobei eine Modul-Verbindungsschnittstelle gemäß obiger Ausführungen vorgesehen ist, wobei die Ladespule der Modul-Verbindungsschnittstelle zur Energieversorgung des Erweiterungsmoduls eingerichtet ist. Da die Energieversorgung somit durch die Wassersportausrüstung erfolgen kann, muss das Erweiterungsmodul vorteilhafterweise nicht mit einem eigenen Energiespeicher ausgestattet sein. Vorzugsweise ist die Modul-Verbindungsschnittstelle ebenfalls an einer Außenwandung des Modulgehäuses angeordnet. Die Außenwandung des Modul-Gehäuses stellt wiederum die äußere Begrenzung des Modul-Gehäuses dar. Die Modul-Verbindungsschnittstelle ist bevorzugt an einer Innenseite der Außenwandung oder in einer Ausnehmung der Außenwandung angeordnet. Wichtig ist dabei, dass das optische Signal von der Modul-Verbindungseinheit beim Senden nach außen, d.h. außerhalb des Gehäuses, und/oder beim Empfangen von außen zur Verbindungseinheit gelangen kann. Dazu kann die Außenwandung an der Stelle, an der die Modul-Verbindungsschnittstelle angeordnet ist, eine für den genutzten Wellenlängenbereich des optischen Signals transparenten Bereich aufweisen. Wenn die Modul-Verbindungsschnittstelle in einer Ausnehmung der Außenwandung angeordnet ist, kann eine wasserdichte Abdeckung für die Modul-Verbindungsschnittstelle verwendet werden oder die Modul-Verbindungsschnittstelle mit einem Kunststoff, beispielsweise einem Hartz, eingegossen sein. Wichtig ist dabei wiederum, dass sämtliche elektronischen Bauteile im Erweiterungsmodul vom umgebenden Wasser abgedichtet sind. Alternativ kann die Modul-Verbindungsschnittstelle auch an der Außenseite des Gehäuses an der Außenwandung angeordnet sein. In diesem Fall kann die Modul-Verbindungsschnittstelle über ein eigenes Gehäuse verfügen, das gegenüber dem umgebenden Wasser abgedichtet ist. Das Modul-Gehäuse ist insbesondere wasserdicht gemäß IP69K ausgeführt.

Bevorzugt ist, wenn an dem Erweiterungsmodul eine Modul-Befestigungsvorrichtung, vorzugsweise eine magnetische und/oder mechanische Modul-Befestigungsvorrichtung, insbesondere eine Befestigungsschiene und/oder eine Befestigungsschraube, zur vorübergehenden Befestigung an der Wassersportausrüstung vorgesehen ist, sodass die Verbindungsschnittstelle des Erweiterungsmoduls mit einer Verbindungsschnittstelle der Wassersportausrüstung (mechanisch) verbindbar ist. Die Modul-Befestigungsvorrichtung kann mit einer Befestigungsvorrichtung der Wassersportausrüstung verbunden werden. Es kann dabei unter anderem vorgesehen sein, dass die Modul-Befestigungsvorrichtung einen Teil einer Schraubverbindung mit der Befestigungsvorrichtung der Wassersportausrüstung bildet. Beispielsweise kann die Modul-Befestigungsvorrichtung eine Schraube aufweisen, welche in ein Befestigungsloch der Befestigungsvorrichtung der Wassersportausrüstung einschraubbar ist. Alternativ oder zusätzlich kann auch vorgesehen sein, dass die Modulbefestigungsvorrichtung ein Rastelement aufweist, dass mit einem Rastmechanismus der Befestigungsvorrichtung der Wassersportausrüstung verrastbar ist. Die Modul-Befestigungsvorrichtung kann auch einen Permanentmagneten aufweisen.

In einer bevorzugten Ausführungsform ist das Erweiterungsmodul als Steuerungsvorrichtung, als Beleuchtungsvorrichtung und/oder als Kamera ausgebildet. Beispielsweise kann die Wassersportausrüstung ein Tauchscooter und das Erweiterungsmodul eine Steuerungsvorrichtung für den Tauchscooter sein. Die Steuerungsvorrichtung kann über die Verbindungsschnittstelle mit dem Tauchscooter verbunden werden und beispielsweise dessen Geschwindigkeit steuern. Die dazu notwendigen Steuersignale können über die Verbindungsschnittstelle der Steuerungsvorrichtung an die Verbindungsschnittstelle des Tauchscooters gesandt werden. Umgekehrt können Zustandsinformationen, wie beispielsweise Ladezustand des Energiespeichers oder Geschwindigkeit, von der Verbindungsschnittstelle des Tauchscooters an die Verbindungsschnittstelle des Steuerungsvorrichtung gesandt werden. Die Steuerungsvorrichtung kann auch wiederum ein Funkmodul, insbesondere ein Bluetooth-Funkmodul, aufweisen, das mit einer Eingabevorrichtung, welche ebenfalls ein Funkmodul aufweist, über Funk verbindbar ist. Dies ist insbesondere dann von Vorteil, wenn die Wassersportausrüstung unter der Wasseroberfläche eingesetzt wird, die Steuerung derselben jedoch außerhalb des Wassers stattfinden soll. Die Steuerungsvorrichtung kann dann beispielsweise durch die Wasseroberfläche durchtreten und den Funkkontakt zur Eingabevorrichtung ermöglichen. Die über das Funkmodul von der Eingabevorrichtung empfangenen Daten kann die Steuerungsvorrichtung über die Modul-Verbindungsschnittstelle an die Verbindungsschnittstelle der Wassersportausrüstung weiterleiten. In einem weiteren Beispiel ist die Wassersportausrüstung als Tauchscooter mit mehreren Verbindungsschnittstellen ausgebildet und mit mehreren Erweiterungsmodulen, beispielsweise in Form einer Steuerungsvorrichtung und einer Beleuchtungsvorrichtung, verbindbar. In diesem Beispiel kann auch vorgesehen sein, dass auch eine Datenübertragung zwischen den Erweiterungsmodulen über die Wassersportausrüstung erfolgt. Beispielsweise kann die Steuerungsvorrichtung die mit dem Tauchscooter verbundene Beleuchtungsvorrichtung aktivieren.

Zusammengefasst werden die Wassersportausrüstung und das Erweiterungsmodul als Set bezeichnet. Das Set besteht aus einer Wassersportausrüstung und einem Erweiterungsmodul gemäß den obigen Ausführungen, wobei in einem Verwendungszustand die Verbindungsschnittstelle der Wassersportausrüstung und die Modul-Verbindungsschnittstelle des Erweiterungsmoduls derart miteinander verbunden sind, dass eine Energieübertragung von der Verbindungsschnittstelle der Wassersportausrüstung an die Modul-Verbindungsschnittstelle des Erweiterungsmoduls und eine Datenübertragung zwischen der Verbindungsschnittstelle der Wassersportausrüstung und der Modul-Verbindungsschnittstelle des Erweiterungsmoduls möglich ist. Die Wassersportausrüstung versorgt somit das Erweiterungsmodul mit (elektrischer) Energie. Die Datenübertragung kann von der Wassersportausrüstung zum Erweiterungsmodul und/oder vom Erweiterungsmodul zur Wassersportausrüstung erfolgen. Es kann auch vorgesehen sein, dass die Wassersportausrüstung zumindest zwei Verbindungsschnittstellen aufweist, welche jeweils mit einem Erweiterungsmodul verbindbar sind. Demnach kann die Wassersportausrüstung gleichzeitig zumindest zwei Erweiterungsmodule mit Energie versorgen und Daten an diese senden und/oder von diesen empfangen. Dabei ist auch denkbar, dass eine Datenübertragung zwischen den Erweiterungsmodulen über die Wassersportausrüstung stattfindet.

Um auch bei trüben Wasser einen Signalaustausch aufrechtzuerhalten ist es vorteilhaft, wenn im verbundenen Zustand der Abstand zwischen der Verbindungsschnittstelle der Wassersportausrüstung und der Verbindungsschnittstelle des Erweiterungsmoduls weniger als 1 cm, vorzugsweise weniger als 0,5 mm, insbesondere weniger als 0,4 mm oder weniger als 3 mm, beträgt. Als Abstand ist der Verbindungseinheiten wird hierbei der freie Übertragungsweg den optischen Signals zwischen den Verbindungsschnittstellen bezeichnet. Der Übertragungsweg wird dabei vorrangig durch den Abstand zwischen den korrespondierenden optischen Verbindungseinheiten (einschließlich etwaiger Lichtwellenleiter) der beiden Verbindungsschnittstellen festgelegt.

Die Erfindung wird im Folgenden anhand von Figuren und bevorzugten Ausführungsformen näher erläutert, auf die sie jedoch nicht beschränkt sein soll.
Fig. 1 zeigt einen Querschnitt durch eine Wassersportausrüstung und ein Erweiterungsmodul mit jeweils einer Verbindungsschnittstelle.
Fig. 2 zeigt eine Wassersportausrüstung in Form eines Tauchscooters mit zwei Erweiterungsmodulen, nämlich einer Steuerungsvorrichtung und einer Beleuchtungsvorrichtung.

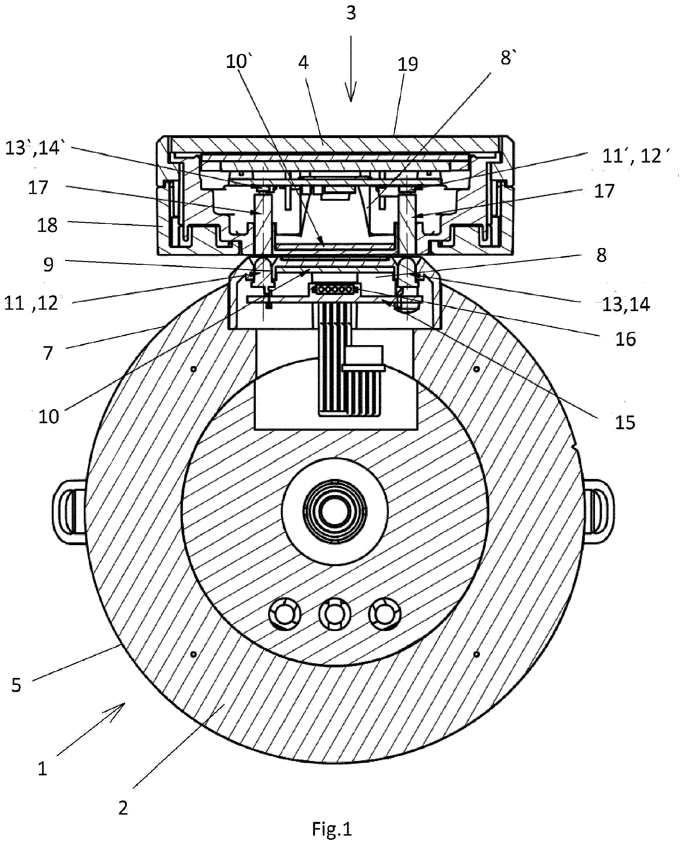

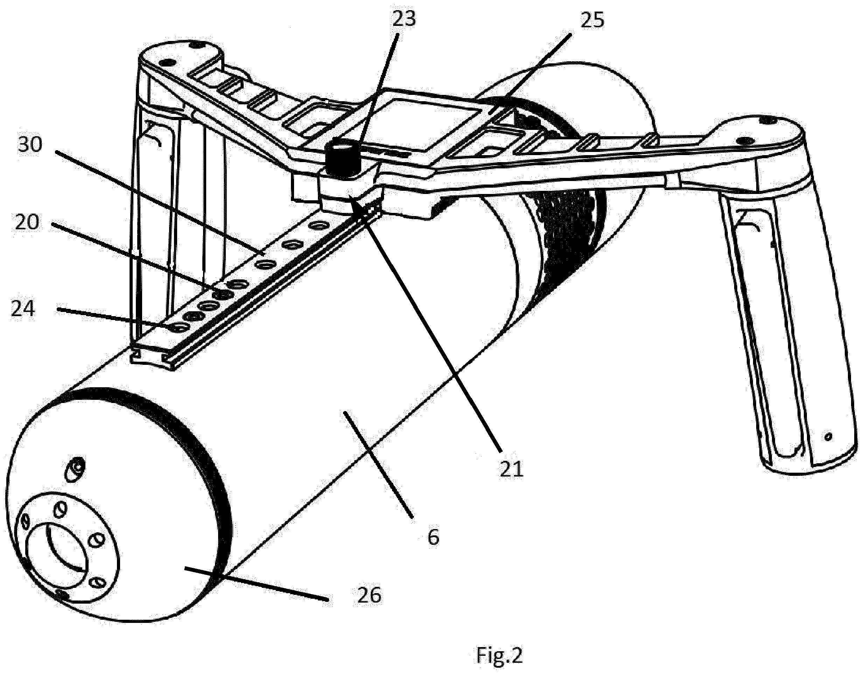

Fig. 1 zeigt einen Querschnitt durch eine Wassersportausrüstung 1 in Form eines Tauchscooters 2 und ein an der Wassersportausrüstung 1 vorübergehend befestigtes Erweiterungsmodul 3 in Form eines Anzeigemoduls 4. Ein Tauchscooter 2 ist eine Unterwasserantriebsvorrichtung für eine Person, welche eine schnellere Fortbewegung unter Wasser ermöglicht. Der Tauchscooter 2 besitzt ein wasserdicht ausgeführtes Gehäuse 5 und einen innerhalb des Gehäuses 5 angeordneten Energiespeicher 6 (siehe Fig. 2, im vorderen Teil des zylindrischen Mantels untergebracht), welcher unter anderem zur Energieversorgung einer Antriebseinheit (nicht dargestellt) des Tauchscooters 2 dient. An einer Außenwandung 7 des Gehäuses 5 ist eine Verbindungsschnittstelle 8 angeordnet. Die Verbindungsschnittstelle 8 besitzt eine optische Verbindungseinheit 9 zum Übertragen von Daten und eine Ladespule 10 zum Übertragen von elektrischer Energie. In der gezeigten Ausführungsform weist die optische Verbindungseinheit 9 eine Sendeeinheit 11 in Form einer IR-Sendediode 12 und eine Empfangseinheit 13 in Form einer IR-Empfangsdiode 14 auf. Die Ladespule 10 ist zwischen der Sendeeinheit 11 und der Empfangseinheit 13 angeordnet, um ein Signalübersprechen zwischen der Sendeeinheit 11 und der Empfangseinheit 13 zu vermeiden. Die Ladespule 10 ist als Flachspule ausgebildet und parallel zur Außenwandung 7 orientiert. Die Verbindungseinheit 9 und die Ladespule 10 sind mit einer Leiterplatte 15 verbunden. Auf der Leiterplatte 15 befindet sich ein Steckverbinder 16 für ein Flachbandkabel, das die Leiterplatte 15 mit einer Hauptplatine (nicht gezeigt) des Tauchscooters 2 verbindet, wobei auf der Hauptplatine ein Mikroprozessor zur Ansteuerung der Ladespule 9 und Kommunikation angeordnet ist. Die Ladespule 10 ist mit dem Energiespeicher 6 verbunden und überträgt Energie von der Verbindungsschnittstelle 8 an eine weitere gleichartige Verbindungsschnittstelle 8' des Erweiterungsmoduls 3.

Die im weiteren Verlauf als Modul-Verbindungsschnittstelle 8' bezeichnete Verbindungsschnittstelle des Erweiterungsmoduls 3 verfügt ebenfalls über eine Sendeeinheit 11' in Form einer IR-Sendediode 12', eine Empfangseinheit 13' in Form einer IR-Empfangsdiode 14' und eine Ladespule 10'. In der gezeigten Ausführungsform weist die Modul-Verbindungsschnittstelle 8' des Erweiterungsmoduls 3 zusätzlich zwei Lichtwellenleiter 17 auf, welche die optischen Signale zur Empfangseinheit 13' bzw. weg von der Sendeeinheit 11' leiten. Dadurch wird es ermöglicht, die Sendeeinheit 11' und die Empfangseinheit 13' an einer anderen, konstruktionstechnisch betrachtet möglicherweise günstigeren Stelle anzuordnen. In Fig. 1 ist erkennbar, dass in der Modul-Verbindungsschnittstelle 8' des Erweiterungsmoduls 3 SMD-Dioden (SMD, "Surface Mounted Devices") für die Sendeeinheit 11' und die Empfangseinheit 13' verwendet werden. Das Erweiterungsmodul verfügt über keinen eigenen Energiespeicher, sondern wird von der Wassersportausrüstung 1 über die Verbindungsschnittstellen 8 und 8' mit Energie versorgt.

Das Erweiterungsmodul 3 besitzt ein Modul-Gehäuse 18 und an einer vom Tauchscooter 2 abgewandten Seite ein Display 19. Um das Erweiterungsmodul 3 mit dem der Wassersportausrüstung 1 lösbar zu verbinden, kann die Wassersportausrüstung 1 eine Befestigungsvorrichtung 20 und das Erweiterungsmodul 3 eine korrespondierende Modul-Befestigungsvorrichtung 21 aufweisen (siehe Fig. 2). Beispielsweise kann die Modul-Befestigungsvorrichtung 21, wie dargestellt, eine Schraube 23 aufweisen, die in ein Befestigungsloch 24 der Befestigungsvorrichtung 20, welche als Befestigungsschiene 30 ausgebildet sein kann, eingeschraubt werden kann. In Fig. 2 ist der Tauchscooter 2 und das Erweiterungsmodul 3 in einer verschraubten Position gezeigt. Alternativ oder zusätzlich kann die Befestigungsvorrichtung 20 einen Rastmechanismus (nicht gezeigt) aufweisen, mit dem das Erweiterungsmodul 3 in einer Rastposition mit der Befestigungsvorrichtung 20 verrastet werden kann. Vorzugsweise ist die Rastposition bzw. die verschraubte Position dabei eine Position, in der die Verbindungsschnittstelle 8 und die Modul-Verbindungsschnittstelle 8' derart aneinander liegen, dass die Ladespulen 10 und 10' übereinander und parallel zueinander angeordnet sind. Zudem kann in der Rastposition vorgesehen sein, dass ein optisches Signal von der Sendeeinheit 11 der einen Verbindungsschnittstelle 8 der Wassersportausrüstung 1 zur Empfangseinheit 13' der Modul-Verbindungsschnittstelle 8' und ein optisches Signal von der Sendeeinheit 11' der Modul-Verbindungsschnittstelle 8' zur Empfangseinheit 13 der Verbindungsschnittstelle 8 der Wassersportausrüstung 1 gelangt.

In Fig. 2 ist ein Set bestehend aus einer Wassersportausrüstung 1 in Form eines Tauchscooters 2 und zwei Erweiterungsmodulen 3 in Form einer Steuerungsvorrichtung 25 und einer Beleuchtungsvorrichtung 26 gezeigt. Die Wassersportausrüstung 1 verfügt über zwei Verbindungsschnittstellen 8. Die Steuerungsvorrichtung 25 kann über die Modul-Verbindungsschnittstelle 8' Steuerungssignale an eine der beiden Verbindungsschnittstellen 8 des Tauchscooters 2 senden. Umgekehrt kann die entsprechende Verbindungsschnittstelle 8 Status-Daten, wie etwa Ladezustand des Energiespeichers 6 oder Geschwindigkeit des Tauchscooters 2, an die Modul-Verbindungsschnittstelle 8' der Steuerungsvorrichtung 25 senden. Auch die Beleuchtungsvorrichtung 26 kann über die Modul-Verbindungsschnittstelle 8' Daten mit der anderen der beiden Verbindungsschnittstellen 8 des Tauchscooters 2 austauschen. Dabei ist auch denkbar, dass Daten zwischen der Beleuchtungsvorrichtung 26 und der Steuerungsvorrichtung 25 über den Tauchscooter 2 ausgetauscht werden, z.B. zum Ein- und Ausschalten eines Leuchtmittels oder zur Einstellung der Helligkeit, zur Steuerung der Lichtfarbe, zur Bestätigung von Steuerbefehlen oder zum Status der Beleuchtungsvorrichtung 26, wie etwa der Temperatur einen Leuchtmittels (z.B. einer LED) oder Fehlermeldungen betreffend das Leuchtmittel.

Aussagen zur Verbindungsschnittstelle 8 können, sofern technisch sinnvoll, auch auf die Modul-Verbindungsschnittstelle 8' übertragen werden - und umgekehrt.

## Patentansprüche

1. Verbindungsschnittstelle (8) für Anwendungen unter Wasser, insbesondere für eine Wassersportausrüstung (1), mit einer Verbindungseinheit zum Übertragen von Daten und mit einer Ladespule (10) zum induktiven Übertragen von Energie an eine gleichartige Verbindungsschnittstelle, **dadurch gekennzeichnet, dass** die Verbindungseinheit als optische Verbindungseinheit (9), insbesondere als Infrarot-Verbindungseinheit, zum Senden und/oder Empfangen eines optischen Signals ausgebildet ist.

2. Verbindungsschnittstelle (8) nach Anspruch 1, **dadurch gekennzeichnet, dass** die Verbindungseinheit (9) eine Sendeeinheit (11), insbesondere eine Sendediode (12), und/oder eine Empfangseinheit (13), insbesondere ein Empfangsdiode (14), aufweist.

3. Verbindungsschnittstelle (8) nach Anspruch 2, **dadurch gekennzeichnet, dass** die Verbindungseinheit (9) eine Sendeeinheit (11) und eine Empfangseinheit (13) aufweist und die Ladespule (10) zwischen der Sendeeinheit (11) und der Empfangseinheit (13) angeordnet ist.

4. Verbindungsschnittstelle (8) nach einem der Ansprüche 1 bis 3, **dadurch gekennzeichnet, dass** die Verbindungseinheit (9) zumindest einen Lichtwellenleiter (17) zur Leitung des optischen Signals aufweist.

5. Wassersportausrüstung (1), insbesondere Tauchscooter (2), mit einem Gehäuse (5) und einem in dem Gehäuse (5) angeordneten Energiespeicher (6), **dadurch gekennzeichnet, dass** an einer Außenwandung (7) des Gehäuses (5) eine Verbindungsschnittstelle (8) nach einem der Ansprüche 1 bis 4 vorgesehen ist, deren Ladespule (10) mit dem Energiespeicher (6) verbunden ist.

6. Wassersportausrüstung (1) nach Anspruch 5, **dadurch gekennzeichnet, dass** die Verbindungsschnittstelle (8), insbesondere die Ladespule (10), im Wesentlichen parallel zur Außenwandung (7) angeordnet ist.

7. Wassersportausrüstung (1) nach Anspruch 5 oder 6, **dadurch gekennzeichnet, dass** das Gehäuse (5) eine Befestigungsvorrichtung (20), vorzugsweise eine mechanische und/oder magnetische Befestigungsvorrichtung (20), insbesondere eine Befestigungsschiene (30), zur vorübergehenden Befestigung eines Erweiterungsmoduls (3) an der Wassersportausrüstung (1) aufweist, sodass die Verbindungsschnittstelle (8) der Wassersportausrüstung (1) mit einer Verbindungsschnittstelle (8') des Erweiterungsmoduls (3) verbindbar ist.

8. Erweiterungsmodul (3) für eine Wassersportausrüstung (1), mit einem Modul-Gehäuse (18), **dadurch gekennzeichnet, dass** eine Modul-Verbindungsschnittstelle (8') nach einem der Ansprüche 1 bis 4 vorgesehen ist, wobei die Ladespule (10') der Modul-Verbindungsschnittstelle (8') zur Energieversorgung des Erweiterungsmoduls (3) eingerichtet ist.

9. Erweiterungsmodul (3) nach Anspruch 8, **dadurch gekennzeichnet, dass** eine Modul-Befestigungsvorrichtung (21), vorzugsweise eine mechanische und/oder magnetische Modul-Befestigungsvorrichtung (21), zur vorübergehenden Befestigung an der Wassersportausrüstung (1) vorgesehen ist, sodass die Verbindungsschnittstelle (8') des Erweiterungsmoduls (3) mit einer Verbindungsschnittstelle (8) der Wassersportausrüstung (1) verbindbar ist.

10. Erweiterungsmodul (3) nach Anspruch 8 oder 9, **dadurch gekennzeichnet, dass** das Erweiterungsmodul (3) als Steuerungsvorrichtung (25), als Beleuchtungsvorrichtung (26) und/oder als Kamera ausgebildet ist.

11. Set, bestehend aus einer Wassersportausrüstung (1) nach einem der Ansprüche 5 bis 7 und einem Erweiterungsmodul (3) nach einem der Ansprüche 8 bis 10, **dadurch gekennzeichnet, dass** in einem Verwendungszustand die Verbindungsschnittstelle (8) der Wassersportausrüstung (1) und die Modul-Verbindungsschnittstelle (8') des Erweiterungsmoduls (3) derart miteinander verbunden sind, dass eine Energieübertragung von der Verbindungsschnittstelle (8) der Wassersportausrüstung (1) an die Modul-Verbindungsschnittstelle (8') des Erweiterungsmoduls (3) und eine Datenübertragung zwischen der Verbindungsschnittstelle (8) der Wassersportausrüstung (1) und der Modul-Verbindungsschnittstelle (8') des Erweiterungsmoduls (3) möglich ist.

12. Set nach Anspruch 11, **dadurch gekennzeichnet, dass** im verbundenen Zustand der Abstand zwischen der Verbindungsschnittstelle (8) der Wassersportausrüstung (1) und der Verbindungsschnittstelle (8') des Erweiterungsmoduls (3) weniger als 1 cm, vorzugsweise weniger als 0,5 mm, insbesondere weniger als 0,4 mm oder weniger als 3 mm, beträgt.
